# EUROPEAN PATENT APPLICATION

(11) **EP 3 399 681 A1**
(43) Date of publication of application: **07.11.2018**
(21) Application number: 16885570.8
(22) Date of filing: 19.01.2016
(51) Int. Cl.: H04L 1/06, H04W 72/12

(54) **FEEDBACK METHOD AND DEVICE FOR UPLINK CHANNEL**

(71) Applicant: Huawei Technologies Co., Ltd., Longgang District Shenzhen, Guangdong 518129 (CN)
(72) Inventor: TIE, Xiaolei, Shenzhen Guangdong 518129 (CN); WU, Gengshi, Shenzhen Guangdong 518129 (CN); WENHAM, Steven James, Shenzhen Guangdong 518129 (CN); YU, Yinghui, Shenzhen Guangdong 518129 (CN)
(74) Representative: Maiwald Patent- und Rechtsanwaltsgesellschaft mbH
(86) International application number: PCT/CN2016/071331
(87) International publication number: WO 2017/124297

(57) **Abstract**

Embodiments of the present invention propose a feedback method for an uplink channel, and an apparatus. In the solution, instead of always sending a first common message or a first scheduling command in any case, a base station determines, only after determining whether a data packet to be sent by a terminal is the last data packet of the terminal, whether a to-be-sent message including an indication bit that is used to indicate whether the base station correctly receives the data packet sent by the terminal is the first scheduling command or the first common message. Alternatively, when the base station determines that the terminal needs to send a next data packet or needs to retransmit the data packet, an indication bit for the terminal in at least two indication bits is used to indicate uplink control information. Therefore, this avoids a waste of resources.

## Description

### TECHNICAL FIELD

The present invention relates to the field of communications technologies, and in particular, to a feedback method for an uplink channel, and an apparatus.

### BACKGROUND

An MTC (Machine Type Communication, machine type communication) technology is an important application in a future communications field. It is predicted that there will be 50 billion connected MTC devices by 2022. In the future, the MTC technology possibly covers the following fields: intelligent meter reading, medical detection, logistics detection, fire detection, wearable device communications, and another field. In an MTC communications system, a base station and a terminal usually need to satisfy a requirement of a large coverage, a large quantity of connections, and low power consumption.

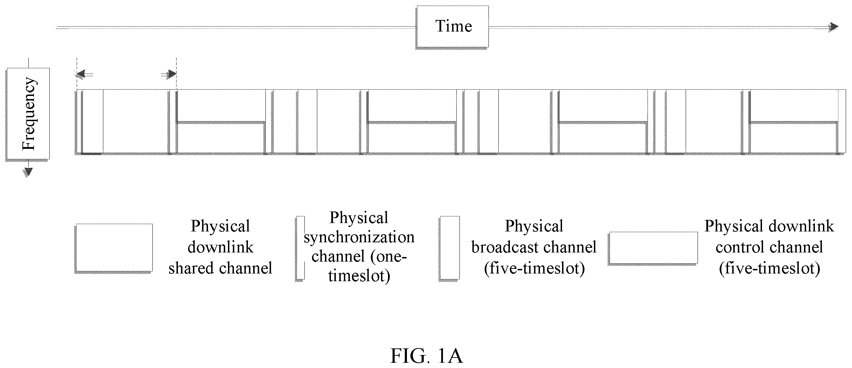

A format of a downlink channel in the MTC communications system is shown in FIG. 1A. A horizontal direction represents time, and a vertical direction represents frequency. The downlink is from a wireless communications base station to a wireless terminal, and is simply referred to as a transmission direction of a terminal. Downlink channels mainly include:
a PDCCH (Physical Downlink Control Channel, physical downlink control channel): used to carry scheduling information and other control information;
a PDSCH (Physical Downlink Shared Channel, physical downlink shared channel): a downlink data channel;
a PBCH (Physical Broadcast Channel, physical broadcast channel): a broadcast channel, used to carry a system message; and
a PSCH (Physical Synchronization Channel, physical synchronization channel): a downlink synchronization channel.

Each terminal reads scheduling signaling over a PDCCH of a corresponding coverage level, to determine whether the terminal is scheduled over a subsequent PDSCH or a PUSCH (Physical Uplink Shared Channel, physical uplink shared channel). If the terminal determines that the terminal is scheduled, the terminal sends or receives data (receives data over the PDSCH and sends data over the PUSCH) on an allocated resource.

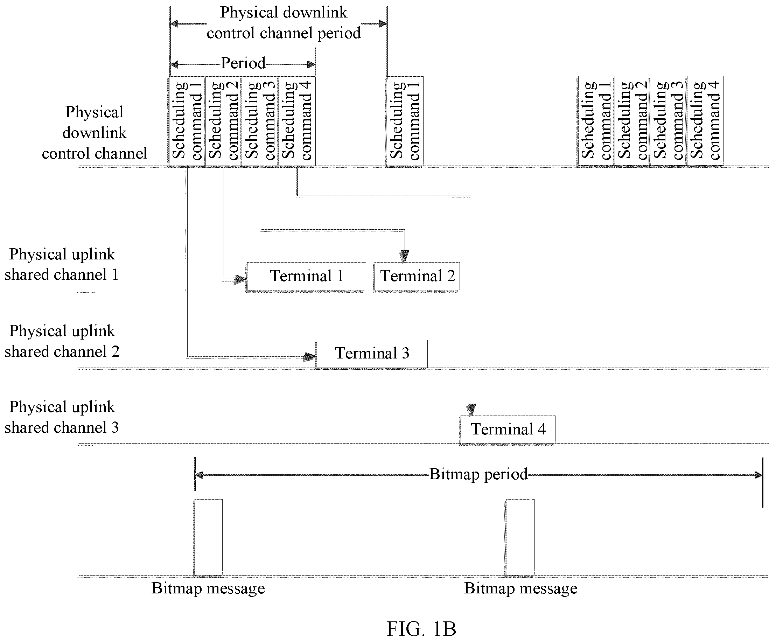

After a base station schedules the terminal to send data over the PUSCH, the base station needs to perform uplink feedback, that is, feed back whether the uplink data sent by the terminal is successfully received, so that the terminal knows whether the data transmitted this time is correctly received by the base station. In the MTC communications system, currently, uplink feedback is performed mainly in a non-bitmap (bitmap) manner and a bitmap manner:
(1) Non-bitmap manner: For a non-last data packet sent by the terminal, the base station indicates ACK/NACK information of an adjacent previous data packet by using an indication field carried in a next scheduling command. An ACK indicates that reception is correct, and a NACK indicates that reception fails or is incorrect. For the last data packet, the base station does not deliver a scheduling command any longer, but feeds back ACK/NACK information of the last data packet of the terminal by using a dedicated message. In this manner, ACK/NACK information of the last data packet of each terminal needs to be fed back by using a dedicated message. Therefore, there is a disadvantage of wasting resources. For example, for a terminal 1, a message 1 is specially used to feed back ACK/NACK information of the last data packet of the terminal 1; for a terminal 2, a message 2 is specially used to feed back ACK/NACK information of the last data packet of the terminal 1; and so on. Therefore, there is a waste of resources.
(2) Bitmap manner: In this feedback manner, for a plurality of terminals, ACK/NACK information is fed back to all the terminals. Each time the base station schedules a terminal, the base station specifies, in a scheduling command, which bit in a bitmap message is corresponding to the terminal. For example, in FIG. 1B, a scheduling command 1, a scheduling command 2, a scheduling command 3, and a scheduling command 4 are sent in the first PDCCH period. The scheduling command 1 is used to schedule a terminal 3, the scheduling command 2 is used to schedule a terminal 1, the scheduling command 3 is used to schedule a terminal 2, and the scheduling command 4 is used to schedule a terminal 4. The base station implements, by using a bitmap message, feedback for uplink data that is received for the current scheduling command. The third bit in the bitmap message is corresponding to the terminal 1, the fourth bit in the bitmap message is corresponding to the terminal 2, the fifth bit in the bitmap message is corresponding to the terminal 3, and the sixth bit in the bitmap message is corresponding to the terminal 4. In this manner, an additional bitmap message needs to be used to feed back ACK/NACK information of a non-last data packet. Therefore, there is also a disadvantage of wasting resources.

To sum up, an existing feedback method for an uplink channel has the disadvantage of wasting resources.

### SUMMARY

Embodiments of the present invention provide a feedback method for an uplink channel, and an apparatus, so as to resolve a resource wasting disadvantage in the prior art.

According to a first aspect, a feedback method for an uplink channel is provided, including:
determining, by a base station, whether a data packet to be sent by a terminal is the last data packet of the terminal; and
if yes, sending, by the base station, a first common message to the terminal after receiving the data packet sent by the terminal, where the first common message includes feedback information, the feedback information can carry at least two indication bits for at least two terminals including the terminal, and the at least two indication bits include an indication bit that is used to indicate whether the base station correctly receives the data packet sent by the terminal; or
if no, sending, by the base station, a first scheduling command to the terminal after receiving the data packet sent by the terminal, where the first scheduling command includes an indication bit that is used to indicate whether the base station correctly receives the data packet sent by the terminal, and the first scheduling command is used to schedule the terminal to resend the data packet or send a next new data packet.

With reference to the first aspect, in a first possible implementation, the determining, by a base station, whether a data packet to be sent by a terminal is the last data packet of the terminal includes:
determining, by the base station based on a buffer status report fed back by the terminal, whether a buffer status corresponding to the buffer status report exceeds a threshold; and
if yes, determining, by the base station, that the data packet to be sent by the terminal is not the last data packet of the terminal; or
if no, determining, by the base station, that the data packet to be sent by the terminal is the last data packet of the terminal.

With reference to the first aspect or the first possible implementation of the first aspect, in a second possible implementation, after the determining, by a base station, whether a data packet to be sent by a terminal is the last data packet of the terminal, and before the receiving the data packet sent by the terminal, the method further includes:
sending, by the base station, a second scheduling command to the terminal, where the second scheduling command is used to indicate an uplink resource that is allocated to the terminal for sending the data packet; and
receiving, by the base station, the data packet that is sent by the terminal on the uplink resource.

With reference to any one of the first aspect, or the first or the second possible implementation of the first aspect, in a third possible implementation, the method further includes:
sending, by the base station, the second scheduling command to the terminal, where the second scheduling command includes feedback resource indication information, where
if the base station determines that the data packet to be sent by the terminal is the last data packet of the terminal, the feedback resource indication information instructs the terminal to obtain the feedback information from the first common message after sending the data packet, and indicates a location, in the at least two indication bits, of the indication bit that is used to indicate whether the base station correctly receives the data packet sent by the terminal; or
if the base station determines that the data packet to be sent by the terminal is not the last data packet of the terminal, the feedback resource indication information instructs the terminal to obtain, from the first scheduling command after sending the data packet, the indication bit that is used to indicate whether the base station correctly receives the data packet sent by the terminal.

According to a second aspect, a feedback method for an uplink channel is provided, including:
receiving, by a terminal, a second scheduling command sent by a base station to the terminal, where the second scheduling command includes feedback resource indication information; and
if the feedback resource indication information instructs the terminal to obtain feedback information from a first common message after sending a data packet, and indicates a location, in at least two indication bits, of an indication bit that is used to indicate whether the base station correctly receives the data packet sent by the terminal, obtaining, by the terminal from the corresponding indication bit of the at least two indication bits, an indication about whether the base station correctly receives the data packet, to determine whether the base station correctly receives the data packet sent by the terminal, where the feedback information can carry the at least two indication bits for at least two terminals including the terminal, and the at least two indication bits include the indication bit that is used to indicate whether the base station correctly receives the data packet sent by the terminal; or
if the feedback resource indication information instructs the terminal to obtain, from a first scheduling command after sending a data packet, an indication bit that is used to indicate whether the base station correctly receives the data packet sent by the terminal, obtaining, by the terminal from the corresponding indication bit in the first scheduling command, an indication about whether the base station correctly receives the data packet sent by the terminal, to determine whether the base station correctly receives the data packet sent by the terminal, where the first scheduling command includes the indication bit that is used to indicate whether the base station correctly receives the data packet sent by the terminal, and the first scheduling command is used to schedule the terminal to resend the data packet or send a next new data packet.

With reference to the second aspect, in a first possible implementation, before the receiving, by a terminal, a second scheduling command sent by a base station to the terminal, the method further includes:
feeding back, by the terminal, a buffer status report to the base station.

With reference to the second aspect, in a second possible implementation, the second scheduling command is used to indicate an uplink resource that is allocated to the terminal for sending the data packet; and
the method further includes:
sending, by the terminal, the data packet to the base station on the uplink resource allocated to the terminal in the second scheduling command.

According to a third aspect, a feedback method for an uplink channel is provided, including:
receiving, by a base station, a data packet sent by a terminal, and determining whether the terminal needs to send a next data packet after sending the data packet or needs to retransmit the data packet; and
when determining that the terminal needs to send the next data packet or needs to retransmit the data packet, sending, by the base station, a first common message to the terminal, where the first common message includes feedback information, the feedback information can carry at least two indication bits for at least two terminals including the terminal, and an indication bit for the terminal in the at least two indication bits is used to indicate uplink control information.

With reference to the third aspect, in a first possible implementation, if the base station determines that the terminal needs to send the next data packet after sending the data packet or needs to retransmit the data packet, the method further includes:
sending, by the base station, a first scheduling command to the terminal, where the first scheduling command is used to schedule the terminal to resend the data packet or send the next data packet, and the first scheduling command includes an indication bit that is used to indicate whether the base station correctly receives the data packet sent by the terminal.

With reference to the third aspect, in a second possible implementation, the method further includes:
when the base station determines that the terminal does not need to send any next data packet after sending the data packet and does not need to retransmit the data packet, sending, by the base station, the first common message to the terminal, where the first common message includes the feedback information, the feedback information can carry the at least two indication bits for the at least two terminals including the terminal, and the indication bit for the terminal in the at least two indication bits is used to indicate whether the base station correctly receives the data packet.

With reference to any one of the third aspect, or the first or the second possible implementation of the third aspect, in a third possible implementation, the determining, by the base station, that the terminal does not need to send any next data packet after sending the data packet includes:
determining, by the base station based on an indication identifier carried in the data packet, that the terminal does not need to send any next data packet after sending the data packet, where the indication identifier indicates that the terminal does not need to send any next data packet after sending the data packet.

With reference to any one of the third aspect, or the first to the third possible implementations of the third aspect, in a fourth possible implementation, before the receiving, by a base station, a data packet sent by a terminal, the method further includes:
sending, by the base station, a second scheduling command to the terminal, where the second scheduling command is used to indicate an uplink resource that is allocated to the terminal for sending the data packet, and the second scheduling command includes feedback resource indication information, where
if the base station determines that the data packet to be sent by the terminal is the last data packet of the terminal, the feedback resource indication information instructs the terminal to obtain the feedback information from the first common message after sending the data packet, and indicates a location, in the at least two indication bits, of the indication bit that is used to indicate whether the base station correctly receives the data packet sent by the terminal; or
if the base station determines that the data packet to be sent by the terminal is not the last data packet of the terminal, the feedback resource indication information instructs the terminal to obtain, from the first scheduling command after sending the data packet, the indication bit that is used to indicate whether the base station correctly receives the data packet sent by the terminal.

According to a fourth aspect, a feedback method for an uplink channel is provided, including:
sending, by a terminal, a data packet to a base station;
when the terminal needs to send a next data packet after sending the data packet, receiving, by the terminal, a first common message sent by the base station, where the first common message includes feedback information, the feedback information can carry at least two indication bits for at least two terminals including the terminal, and an indication bit for the terminal in the at least two indication bits is used to indicate uplink control information; and
determining, by the terminal, the uplink control information based on the indication bit for the terminal in the at least two indication bits.

With reference to the fourth aspect, in a first possible implementation, the method further includes:
after sending the data packet, receiving, by the terminal, a first scheduling command sent by the base station, where the first scheduling command is used to schedule the terminal to resend the data packet or send the next data packet, and the first scheduling command includes an indication bit that is used to indicate whether the base station correctly receives the data packet sent by the terminal.

With reference to the fourth aspect or the first possible implementation of the fourth aspect, in a second possible implementation, the data packet carries an indication identifier, and the indication identifier indicates that the terminal does not need to send any next data packet after sending the data packet.

With reference to any one of the fourth aspect, or the first or the second possible implementation of the fourth aspect, in a third possible implementation, the method further includes:
sending, by the terminal, the data packet to the base station;
when the terminal does not need to send any next data packet after sending the data packet, continuously monitoring, by the terminal, a used-for-scheduling control channel in a preset time period after sending the data packet; and
if the terminal determines that the first scheduling command sent to the terminal is detected in the preset time period, determining, by the terminal based on the indication bit that is in the first scheduling command and that is used to indicate whether the base station correctly receives the data packet sent by the terminal, whether the base station correctly receives the data packet, where the first scheduling command is used to schedule the terminal to resend the data packet or send the next data packet, and the first scheduling command includes the indication bit that is used to indicate whether the base station correctly receives the data packet sent by the terminal.

With reference to the third possible implementation of the fourth aspect, in a fourth possible implementation, the method further includes:
receiving, by the terminal, the first common message sent by the base station, where the first common message includes the feedback information, the feedback information can carry the at least two indication bits for the at least two terminals including the terminal, and the indication bit for the terminal in the at least two indication bits is used to indicate whether the base station correctly receives the data packet; and
determining, by the terminal, uplink control information based on the indication bit for the terminal in the at least two indication bits.

With reference to the fourth possible implementation of the fourth aspect, in a fifth possible implementation, if the terminal determines that the first scheduling command sent to the terminal is not detected in the preset time period, the terminal determines, based on the indication bit for the terminal in the at least two indication bits, whether the base station correctly receives the data packet sent by the terminal.

According to a fifth aspect, a base station is provided, including:
a processing unit, configured to determine whether a data packet to be sent by a terminal is the last data packet of the terminal;
a receiving unit, configured to receive the data packet sent by the terminal; and
a sending unit, configured to send a first common message to the terminal after the receiving unit receives the data packet sent by the terminal, where the first common message includes feedback information, the feedback information can carry at least two indication bits for at least two terminals including the terminal, and the at least two indication bits include an indication bit that is used to indicate whether the base station correctly receives the data packet sent by the terminal, where
the sending unit is further configured to send a first scheduling command to the terminal after the receiving unit receives the data packet sent by the terminal, where the first scheduling command includes an indication bit that is used to indicate whether the base station correctly receives the data packet sent by the terminal, and the first scheduling command is used to schedule the terminal to resend the data packet or send a next new data packet.

With reference to the fifth aspect, in a first possible implementation, determining, by the processing unit, whether the data packet to be sent by the terminal is the last data packet of the terminal is specifically:
determining, based on a buffer status report fed back by the terminal, whether a buffer status corresponding to the buffer status report exceeds a threshold; and
if yes, determining that the data packet to be sent by the terminal is not the last data packet of the terminal; or
if no, determining that the data packet to be sent by the terminal is the last data packet of the terminal.

With reference to the fifth aspect or the first possible implementation of the fifth aspect, in a second possible implementation, the sending unit is further configured to send a second scheduling command to the terminal, where the second scheduling command is used to indicate an uplink resource that is allocated to the terminal for sending the data packet; and
the receiving unit is further configured to receive the data packet that is sent by the terminal on the uplink resource.

With reference to any one of the fifth aspect, or the first or the second possible implementation of the fifth aspect, in a third possible implementation, the sending unit is further configured to send a second scheduling command to the terminal, where the second scheduling command includes feedback resource indication information; and
if the processing unit determines that the data packet to be sent by the terminal is the last data packet of the terminal, the feedback resource indication information instructs the terminal to obtain the feedback information from the first common message after sending the data packet, and indicates a location, in the at least two indication bits, of the indication bit that is used to indicate whether the base station correctly receives the data packet sent by the terminal; or
if the processing unit determines that the data packet to be sent by the terminal is not the last data packet of the terminal, the feedback resource indication information instructs the terminal to obtain, from the first scheduling command after sending the data packet, the indication bit that is used to indicate whether the base station correctly receives the data packet sent by the terminal.

According to a sixth aspect, a terminal is provided, including:
a receiving unit, configured to receive a second scheduling command sent by a base station to the terminal, where the second scheduling command includes feedback resource indication information; and
a processing unit, configured to: if the feedback resource indication information instructs the terminal to obtain feedback information from a first common message after sending a data packet, and indicates a location, in at least two indication bits, of an indication bit that is used to indicate whether the base station correctly receives the data packet sent by the terminal, obtain, from the corresponding indication bit of the at least two indication bits, an indication about whether the base station correctly receives the data packet, to determine whether the base station correctly receives the data packet sent by the terminal, where the feedback information can carry the at least two indication bits for at least two terminals including the terminal, and the at least two indication bits include the indication bit that is used to indicate whether the base station correctly receives the data packet sent by the terminal, where
the processing unit is further configured to: if the feedback resource indication information instructs the terminal to obtain, from a first scheduling command after sending the data packet, an indication bit that is used to indicate whether the base station correctly receives the data packet sent by the terminal, obtain, from the corresponding indication bit in the first scheduling command, an indication about whether the base station correctly receives the data packet sent by the terminal, to determine whether the base station correctly receives the data packet sent by the terminal, where the first scheduling command includes the indication bit that is used to indicate whether the base station correctly receives the data packet sent by the terminal, and the first scheduling command is used to schedule the terminal to resend the data packet or send a next new data packet.

With reference to the sixth aspect, in a first possible implementation, the terminal further includes a sending unit, configured to feed back a buffer status report to the base station.

With reference to the sixth aspect, in a first possible implementation, the second scheduling command is used to indicate an uplink resource that is allocated to the terminal for sending the data packet; and
the sending unit is further configured to send the data packet to the base station on the uplink resource allocated to the terminal in the second scheduling command.

According to a seventh aspect, a base station is provided, including:
a receiving unit, configured to receive a data packet sent by a terminal;
a processing unit, configured to determine whether the terminal needs to send a next data packet after sending the data packet or needs to retransmit the data packet; and
a sending unit, configured to: when the processing unit determines that the terminal needs to send the next data packet or needs to retransmit the data packet, send a first common message to the terminal, where the first common message includes feedback information, the feedback information can carry at least two indication bits for at least two terminals including the terminal, and an indication bit for the terminal in the at least two indication bits is used to indicate uplink control information.

With reference to the seventh aspect, in a first possible implementation, the sending unit is further configured to: when the processing unit determines that the terminal needs to send the next data packet after sending the data packet or needs to retransmit the data packet, send a first scheduling command to the terminal, where the first scheduling command is used to schedule the terminal to resend the data packet or send the next data packet, and the first scheduling command includes an indication bit that is used to indicate whether the base station correctly receives the data packet sent by the terminal.

With reference to the seventh aspect, in a second possible implementation, the sending unit is further configured to: when the processing unit determines that the terminal does not need to send any next data packet after sending the data packet and does not need to retransmit the data packet, send the first common message to the terminal, where the first common message includes the feedback information, the feedback information can carry the at least two indication bits for the at least two terminals including the terminal, and the indication bit for the terminal in the at least two indication bits is used to indicate whether the base station correctly receives the data packet.

With reference to any one of the seventh aspect, or the first or the second possible implementation of the seventh aspect, in a third possible implementation, the determining, by the processing unit, that the terminal does not need to send any next data packet after sending the data packet is specifically:
determining, based on an indication identifier carried in the data packet, that the terminal does not need to send any next data packet after sending the data packet, where the indication identifier indicates that the terminal does not need to send any next data packet after sending the data packet.

With reference to any one of the seventh aspect, or the first to the third possible implementations of the seventh aspect, in a fourth possible implementation, the sending unit is further configured to send a second scheduling command to the terminal, where the second scheduling command is used to indicate an uplink resource that is allocated to the terminal for sending the data packet, and the second scheduling command includes feedback resource indication information; and
if the processing unit determines that the data packet to be sent by the terminal is the last data packet of the terminal, the feedback resource indication information instructs the terminal to obtain the feedback information from the first common message after sending the data packet, and indicates a location, in the at least two indication bits, of the indication bit that is used to indicate whether the base station correctly receives the data packet sent by the terminal; or
if the processing unit determines that the data packet to be sent by the terminal is not the last data packet of the terminal, the feedback resource indication information instructs the terminal to obtain, from the first scheduling command after sending the data packet, the indication bit that is used to indicate whether the base station correctly receives the data packet sent by the terminal.

According to an eighth aspect, a terminal is provided, including:
a sending unit, configured to send a data packet to a base station;
a receiving unit, configured to: when a next data packet needs to be sent after the data packet is sent, receive a first common message sent by the base station, where the first common message includes feedback information, the feedback information can carry at least two indication bits for at least two terminals including the terminal, and an indication bit for the terminal in the at least two indication bits is used to indicate uplink control information; and
a processing unit, configured to determine the uplink control information based on the indication bit for the terminal in the at least two indication bits.

With reference to the eighth aspect, in a first possible implementation, the receiving unit is further configured to: after the sending unit sends the data packet, receive a first scheduling command sent by the base station, where the first scheduling command is used to schedule the terminal to resend the data packet or send the next data packet, and the first scheduling command includes an indication bit that is used to indicate whether the base station correctly receives the data packet sent by the terminal.

With reference to the eighth aspect or the first possible implementation of the eighth aspect, in a second possible implementation, the data packet carries an indication identifier, and the indication identifier indicates that the terminal does not need to send any next data packet after sending the data packet.

With reference to any one of the eighth aspect, or the first or the second possible implementation of the eighth aspect, in a third possible implementation, the sending unit is further configured to send the data packet to the base station;
the processing unit is further configured to: when the sending unit does not need to send any next data packet after sending the data packet, continuously monitor a used-for-scheduling control channel in a preset time period after the data packet is sent; and
the processing unit is further configured to: if it is determined that the first scheduling command sent to the terminal is detected in the preset time period, determine, based on the indication bit that is in the first scheduling command and that is used to indicate whether the base station correctly receives the data packet sent by the terminal, whether the base station correctly receives the data packet, where the first scheduling command is used to schedule the terminal to resend the data packet or send the next data packet, and the first scheduling command includes the indication bit that is used to indicate whether the base station correctly receives the data packet sent by the terminal.

With reference to the third possible implementation of the eighth aspect, in a fourth possible implementation, the receiving unit is further configured to receive the first common message sent by the base station, where the first common message includes the feedback information, the feedback information can carry the at least two indication bits for the at least two terminals including the terminal, and the indication bit for the terminal in the at least two indication bits is used to indicate whether the base station correctly receives the data packet; and
the processing unit is further configured to determine uplink control information based on the indication bit for the terminal in the at least two indication bits.

With reference to the third possible implementation of the eighth aspect, in a fifth possible implementation, the processing unit is further configured to: if it is determined that the first scheduling command sent to the terminal is not detected in the preset time period, determine, based on the indication bit for the terminal in the at least two indication bits, whether the base station correctly receives the data packet sent by the terminal.

The embodiments of the present invention propose the feedback method for an uplink channel: determining, by the base station, whether the data packet to be sent by the terminal is the last data packet of the terminal; and if yes, sending, by the base station, the first common message to the terminal after receiving the data packet sent by the terminal, where the first common message includes the feedback information, the feedback information can carry the at least two indication bits for the at least two terminals including the terminal, and the at least two indication bits include the indication bit that is used to indicate whether the base station correctly receives the data packet sent by the base station; or if no, sending, by the base station, the first scheduling command to the terminal after receiving the data packet sent by the terminal, where the first scheduling command includes the indication bit that is used to indicate whether the base station correctly receives the data packet sent by the terminal, and the first scheduling command is used to schedule the terminal to resend the data packet or send the next new data packet. In this solution, instead of always sending the first common message or the first scheduling command in any case, the base station determines, only after determining whether the data packet to be sent by the terminal is the last data packet of the terminal, whether a to-be-sent message including the indication bit that is used to indicate whether the base station correctly receives the data packet sent by the terminal is the first scheduling command or the first common message. Therefore, this avoids a waste of resources.

The embodiments of the present invention further propose the feedback method for an uplink channel: receiving, by the base station, the data packet sent by the terminal, and determining whether the terminal needs to send the next data packet after sending the data packet or needs to retransmit the data packet; and when determining that the terminal needs to send the next data packet or needs to retransmit the data packet, sending, by the base station, the first common message to the terminal, where the first common message includes the feedback information, the feedback information can carry the at least two indication bits for the at least two terminals including the terminal, and the indication bit for the terminal in the at least two indication bits is used to indicate the uplink control information. In this solution, when the base station determines that the base station needs to send the next data packet or needs to retransmit the data packet, the indication bit for the terminal in the at least two indication bits is used to indicate the uplink control information, but is not used to indicate ACK/NACK information for the data packet. Therefore, this avoids a waste of resources.

### BRIEF DESCRIPTION OF DRAWINGS

FIG. 1A is a schematic diagram of a format of a downlink channel in an MTC communications system in the prior art;
FIG. 1B is a schematic diagram of scheduling performed in a bitmap manner in the prior art;
FIG. 2A is a schematic diagram of a scenario of feedback for an uplink channel according to an embodiment of the present invention;
FIG. 2B is a flowchart of feedback for an uplink channel according to an embodiment of the present invention;
FIG. 3 is another flowchart of feedback for an uplink channel according to an embodiment of the present invention;
FIG. 4 is another flowchart of feedback for an uplink channel according to an embodiment of the present invention;
FIG. 5 is another flowchart of feedback for an uplink channel according to an embodiment of the present invention;
FIG. 6A is a schematic diagram of a base station according to an embodiment of the present invention;
FIG. 6B is another schematic diagram of a base station according to an embodiment of the present invention;
FIG. 7A is a schematic diagram of a terminal according to an embodiment of the present invention;
FIG. 7B is another schematic diagram of a terminal according to an embodiment of the present invention;
FIG. 8A is another schematic diagram of a base station according to an embodiment of the present invention;
FIG. 8B is another schematic diagram of a base station according to an embodiment of the present invention;
FIG. 9A is another schematic diagram of a terminal according to an embodiment of the present invention; and
FIG. 9B is another schematic diagram of a terminal according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely some rather than all of the embodiments of the present invention. All other embodiments obtained by a person of ordinary skill in the art based on the embodiments of the present invention without creative efforts shall fall within the protection scope of the present invention.

The following describes a wireless communications system to which the embodiments of the present invention are applicable.

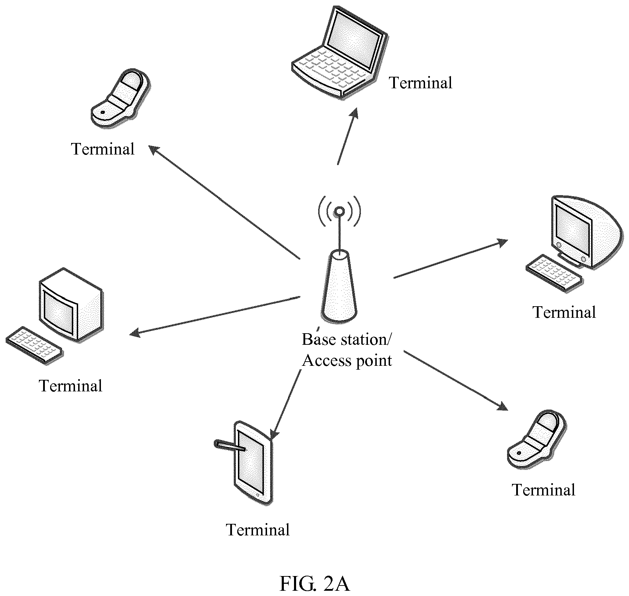

Referring to FIG. 2A, the wireless communications system includes a base station or an access point, and a wireless terminal. The base station or the access point is configured to provide a communications service for at least one wireless terminal. The base station, the access point, or the wireless terminal may include at least one antenna. The wireless terminal may be a mobile station, a remote station, user equipment, or the like. A specific form of the wireless terminal may be a mobile phone, a tablet computer, a personal digital assistant, or other user equipment.

The following describes the embodiments of the present invention in detail with reference to the accompanying drawings.

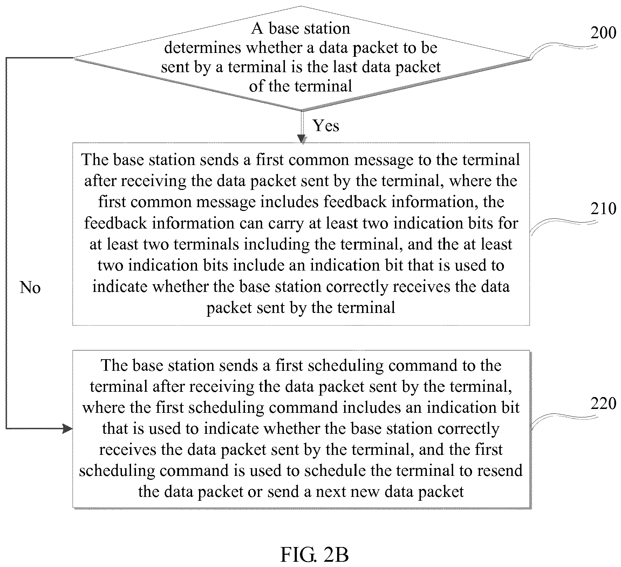

Referring to FIG. 2B, in an embodiment of the present invention, an uplink feedback process is as follows:
Step 200: A base station determines whether a data packet to be sent by a terminal is the last data packet of the terminal, and if yes, performs step 210, or if no, performs step 220.
Step 210: The base station sends a first common message to the terminal after receiving the data packet sent by the terminal, where the first common message includes feedback information, the feedback information can carry at least two indication bits for at least two terminals including the terminal, and the at least two indication bits include an indication bit that is used to indicate whether the base station correctly receives the data packet sent by the terminal.
Step 220: The base station sends a first scheduling command to the terminal after receiving the data packet sent by the terminal, where the first scheduling command includes an indication bit that is used to indicate whether the base station correctly receives the data packet sent by the terminal, and the first scheduling command is used to schedule the terminal to resend the data packet or send a next new data packet.

In this solution, instead of always sending the first common message or the first scheduling command in any case, the base station determines, only after determining whether the data packet to be sent by the terminal is the last data packet of the terminal, whether a to-be-sent message including the indication bit that is used to indicate whether the base station correctly receives the data packet sent by the terminal is the first scheduling command or the first common message. Therefore, this avoids a waste of resources.

In this embodiment of the present invention, the indication bit that is included in the first scheduling command and that is used to indicate whether the base station correctly receives the data packet sent by the terminal may be an indication bit that directly indicates whether the base station correctly receives the data packet sent by the terminal, or may be an indication bit that indirectly indicates whether the base station correctly receives the data packet sent by the terminal. For example, the indication bit indicates a number of a next data packet, and indicates, by using the number of the next data packet, whether the base station correctly receives the data packet sent by the terminal. If the indication bit indicates a previous data packet instead of a number of a next data packet, it indicates that the previous data packet is not correctly received.

Optionally, the feedback information may be a bitmap. In this case, a resource location in the feedback information is a bit location, and each bit location may be allocated to a terminal. Alternatively, the feedback information is carried on a section of a shared resource, and different terminals perform resource multiplexing through code division (CDMA). In this case, a resource location in the feedback information is corresponding to a code resource, and each code resource may be allocated to a terminal to carry ACK/NACK information or other signaling.

In this embodiment of the present invention, optionally, the base station may use the following manner to determine whether the data packet to be sent by the terminal is the last data packet of the terminal:
determining, by the base station based on a BSR (Buffer Status Report, buffer status report) fed back by the terminal, whether a buffer status corresponding to the buffer status report exceeds a threshold; and
if yes, determining, by the base station, that the data packet to be sent by the terminal is not the last data packet of the terminal; or
if no, determining, by the base station, that the data packet to be sent by the terminal is the last data packet of the terminal.

In this embodiment of the present invention, further, after the determining, by a base station, whether a data packet to be sent by a terminal is the last data packet of the terminal, and before the receiving the data packet sent by the terminal, the method further includes the following operation:
sending, by the base station, a second scheduling command to the terminal, where the second scheduling command is used to indicate an uplink resource that is allocated to the terminal for sending the data packet; and
receiving, by the base station, the data packet that is sent by the terminal on the uplink resource.

In this embodiment of the present invention, the method further includes the following operation:
sending, by the base station, the second scheduling command to the terminal, where the second scheduling command includes feedback resource indication information, where
if the base station determines that the data packet to be sent by the terminal is the last data packet of the terminal, the feedback resource indication information instructs the terminal to obtain the feedback information from the first common message after sending the data packet, and indicates a location, in the at least two indication bits, of the indication bit that is used to indicate whether the base station correctly receives the data packet sent by the terminal; or
if the base station determines that the data packet to be sent by the terminal is not the last data packet of the terminal, the feedback resource indication information instructs the terminal to obtain, from the first scheduling command after sending the data packet, the indication bit that is used to indicate whether the base station correctly receives the data packet sent by the terminal.

For example, the feedback information is for four terminals. A first indication bit in the feedback information is corresponding to a terminal 1, a second indication bit in the feedback information is corresponding to a terminal 2, and a third indication bit in the feedback information is corresponding to a terminal 3. In this case, the first indication bit in the feedback information indicates ACK/NACK information for a data packet of the terminal 1, the second indication bit in the feedback information indicates ACK/NACK information for a data packet of the terminal 2, and the third indication bit in the feedback information indicates ACK/NACK information for a data packet of the terminal 3.

It should be noted that, although the feedback information sent by the terminal may be for at least two terminals, the feedback information is possibly for only one terminal in actual application.

It should be noted that, the base station may use different indication manners to indicate to the terminal whether ACK/NACK information is determined based on the first common message or the first scheduling command. In a manner, a flag bit in a scheduling command is used for indication. If the flag bit is "1", the terminal determines the ACK/NACK information based on the first scheduling command. If the flag bit is "0", the terminal determines the ACK/NACK information based on the first common message, and determines, according to a preset rule or an indication in the scheduling command, the indication bit corresponding to the terminal in the feedback information. In another manner, different scheduling command formats are used for differentiation. The terminal determines a type of a received indication message through blind detection. If the type is a first indication message type, the terminal determines an ACK/NACK message by using the first common message. If the type is a second indication message type, the terminal determines the ACK/NACK information based on the first scheduling command.

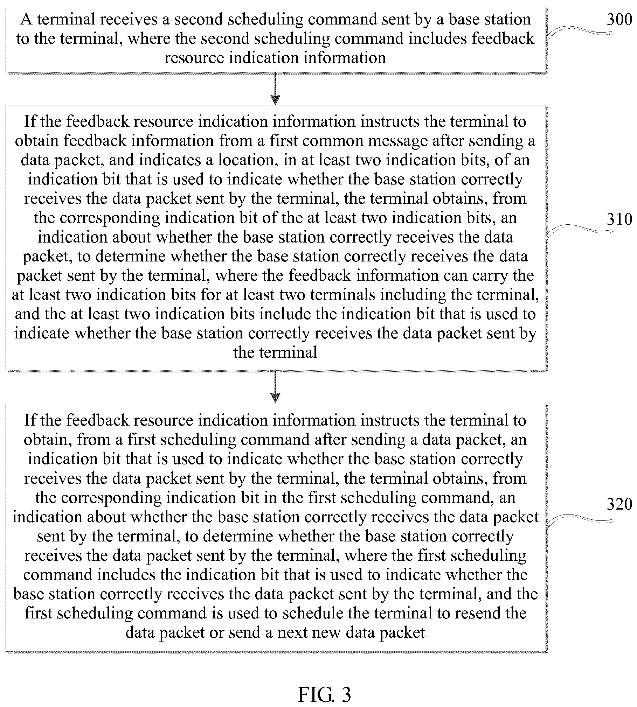

Referring to FIG. 3, in an embodiment of the present invention, a process of feedback for an uplink channel is as follows:
Step 300: A terminal receives a second scheduling command sent by a base station to the terminal, where the second scheduling command includes feedback resource indication information.
Step 310: If the feedback resource indication information instructs the terminal to obtain feedback information from a first common message after sending a data packet, and indicates a location, in at least two indication bits, of an indication bit that is used to indicate whether the base station correctly receives the data packet sent by the terminal, the terminal obtains, from the corresponding indication bit of the at least two indication bits, an indication about whether the base station correctly receives the data packet, to determine whether the base station correctly receives the data packet sent by the terminal, where the feedback information can carry the at least two indication bits for at least two terminals including the terminal, and the at least two indication bits include the indication bit that is used to indicate whether the base station correctly receives the data packet sent by the terminal.
Step 320: If the feedback resource indication information instructs the terminal to obtain, from a first scheduling command after sending a data packet, an indication bit that is used to indicate whether the base station correctly receives the data packet sent by the terminal, the terminal obtains, from the corresponding indication bit in the first scheduling command, an indication about whether the base station correctly receives the data packet sent by the terminal, to determine whether the base station correctly receives the data packet sent by the terminal, where the first scheduling command includes the indication bit that is used to indicate whether the base station correctly receives the data packet sent by the terminal, and the first scheduling command is used to schedule the terminal to resend the data packet or send a next new data packet.

In this solution, instead of always sending the first common message or the first scheduling command in any case, the base station determines, only after determining whether the data packet to be sent by the terminal is the last data packet of the terminal, whether a to-be-sent message including the indication bit that is used to indicate whether the base station correctly receives the data packet sent by the terminal is the first scheduling command or the first common message. Therefore, this avoids a waste of resources.

In this embodiment of the present invention, the indication bit that is included in the first scheduling command and that is used to indicate whether the base station correctly receives the data packet sent by the terminal may be an indication bit that directly indicates whether the base station correctly receives the data packet sent by the terminal, or may be an indication bit that indirectly indicates whether the base station correctly receives the data packet sent by the terminal. For example, the indication bit indicates a number of a next data packet, and indicates, by using the number of the next data packet, whether the base station correctly receives the data packet sent by the terminal.

Optionally, the feedback information may be a bitmap. In this case, a resource location in the feedback information is a bit location, and each bit location may be allocated to a terminal. Alternatively, the feedback information is carried on a section of a shared resource, and different terminals perform resource multiplexing through code division (CDMA). In this case, a resource location in the feedback information is corresponding to a code resource, and each code resource may be allocated to a terminal to carry ACK/NACK information or other signaling.

In this embodiment of the present invention, before the receiving, by a terminal, a second scheduling command sent by a base station to the terminal, the method further includes the following operation:
feeding back, by the terminal, a buffer status report to the base station.

In this embodiment of the present invention, optionally, the second scheduling command is used to indicate an uplink resource that is allocated to the terminal for sending the data packet; and
the method further includes the following operation:
sending, by the terminal, the data packet to the base station on the uplink resource allocated to the terminal in the second scheduling command.

For example, the feedback information is for four terminals. A first indication bit in the feedback information is corresponding to a terminal 1, a second indication bit in the feedback information is corresponding to a terminal 2, and a third indication bit in the feedback information is corresponding to a terminal 3. In this case, the first indication bit in the feedback information indicates ACK/NACK information for a data packet of the terminal 1, the second indication bit in the feedback information indicates ACK/NACK information for a data packet of the terminal 2, and the third indication bit in the feedback information indicates ACK/NACK information for a data packet of the terminal 3.

It should be noted that, although the feedback information sent by the terminal may be for at least two terminals, the feedback information is possibly for only one terminal in actual application.

It should be noted that, the base station may use different indication manners to indicate to the terminal whether ACK/NACK information is determined based on the first common message or the first scheduling command. In a manner, a flag bit in a scheduling command is used for indication. If the flag bit is "1", the terminal determines the ACK/NACK information based on the first scheduling command. If the flag bit is "0", the terminal determines the ACK/NACK information based on the first common message, and determines, according to a preset rule or an indication in the scheduling command, the indication bit corresponding to the terminal in the first common message. In another manner, different scheduling command formats are used for differentiation. The terminal determines a type of a received indication message through blind detection. If the type is a first indication message type, the terminal determines an ACK/NACK message by using the first common message. If the type is a second indication message type, the terminal determines the ACK/NACK information based on the first scheduling command.

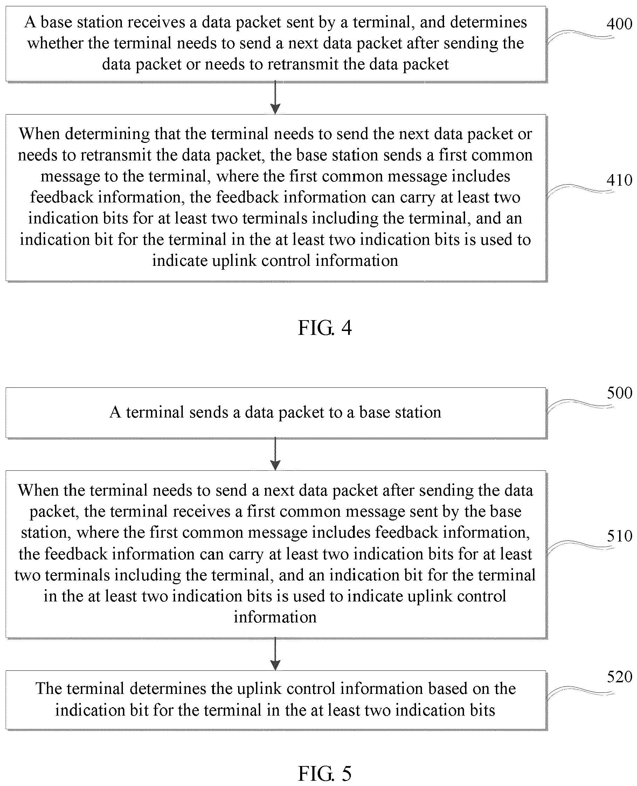

Referring to FIG. 4, in an embodiment of the present invention, a process of feedback for an uplink channel is as follows:
Step 400: A base station receives a data packet sent by a terminal, and determines whether the terminal needs to send a next data packet after sending the data packet or needs to retransmit the data packet.
Step 410: When determining that the terminal needs to send the next data packet or needs to retransmit the data packet, the base station sends a first common message to the terminal, where the first common message includes feedback information, the feedback information can carry at least two indication bits for at least two terminals including the terminal, and an indication bit for the terminal in the at least two indication bits is used to indicate uplink control information.

In this embodiment of the present invention, if the base station determines that the terminal needs to send the next data packet after sending the data packet or needs to retransmit the data packet, the method further includes the following operation:
sending, by the base station, a first scheduling command to the terminal, where the first scheduling command is used to schedule the terminal to resend the data packet or send the next data packet, and the first scheduling command includes an indication bit that is used to indicate whether the base station correctly receives the data packet sent by the terminal.

In other words, when the terminal needs to send the next data packet or needs to retransmit the data packet, whether the base station correctly receives the data packet sent by the terminal is indicated by using the first scheduling command, and the indication bit for the terminal in the at least two indication bits in the feedback information is used to indicate the uplink control information. Therefore, this solution avoids a waste of resources.

The foregoing describes a case in which the base station determines that the terminal needs to send the next data packet after sending the data packet or needs to retransmit the data packet. In actual application, there is possibly a case in which the base station determines that the terminal does not need to send any next data packet after sending the data packet and does not need to retransmit the data packet. In this embodiment of the present invention, the method further includes the following operation:
when the base station determines that the terminal does not need to send any next data packet after sending the data packet and does not need to retransmit the data packet, sending, by the base station, the first common message to the terminal, where the first common message includes the feedback information, the feedback information can carry the at least two indication bits for the at least two terminals including the terminal, and the indication bit for the terminal in the at least two indication bits is used to indicate whether the base station correctly receives the data packet.

In this embodiment of the present invention, optionally, the base station may use the following manner to determine that the terminal does not need to send any next data packet after sending the data packet:
determining, by the base station based on an indication identifier carried in the data packet, that the terminal does not need to send any next data packet after sending the data packet, where the indication identifier indicates that the terminal does not need to send any next data packet after sending the data packet.

In this embodiment of the present invention, before the receiving, by a base station, a data packet sent by a terminal, the method further includes the following operation:
sending, by the base station, a second scheduling command to the terminal, where the second scheduling command is used to indicate an uplink resource that is allocated to the terminal for sending the data packet, and the second scheduling command includes feedback resource indication information, where
if the base station determines that the data packet to be sent by the terminal is the last data packet of the terminal, the feedback resource indication information instructs the terminal to obtain the feedback information from the first common message after sending the data packet, and indicates a location, in the at least two indication bits, of the indication bit that is used to indicate whether the base station correctly receives the data packet sent by the terminal; or
if the base station determines that the data packet to be sent by the terminal is not the last data packet of the terminal, the feedback resource indication information instructs the terminal to obtain, from the first scheduling command after sending the data packet, the indication bit that is used to indicate whether the base station correctly receives the data packet sent by the terminal.

Optionally, the feedback information may be a bitmap. In this case, a resource location in the feedback information is a bit location, and each bit location may be allocated to a terminal. Alternatively, the feedback information is carried on a section of a shared resource, and different terminals perform resource multiplexing through code division (CDMA). In this case, a resource location in the feedback information is corresponding to a code resource, and each code resource may be allocated to a terminal to carry ACK/NACK information or other signaling.

The uplink control information includes but is not limited to an uplink power control command.

Referring to FIG. 5, in an embodiment of the present invention, a process of feedback for an uplink channel is as follows:
Step 500: A terminal sends a data packet to a base station.
Step 510: When the terminal needs to send a next data packet after sending the data packet, the terminal receives a first common message sent by the base station, where the first common message includes feedback information, the feedback information can carry at least two indication bits for at least two terminals including the terminal, and an indication bit for the terminal in the at least two indication bits is used to indicate uplink control information.
Step 520: The terminal determines the uplink control information based on the indication bit for the terminal in the at least two indication bits.

In this embodiment of the present invention, further, the method further includes the following operation:
after sending the data packet, receiving, by the terminal, a first scheduling command sent by the base station, where the first scheduling command is used to schedule the terminal to resend the data packet or send the next data packet, and the first scheduling command includes an indication bit that is used to indicate whether the base station correctly receives the data packet sent by the terminal.

In this embodiment of the present invention, the data packet carries an indication identifier, and the indication identifier indicates that the terminal does not need to send any next data packet after sending the data packet.

In this embodiment of the present invention, further, the method further includes the following operations:
sending, by the terminal, the data packet to the base station;
when the terminal does not need to send any next data packet after sending the data packet, continuously monitoring, by the terminal, a used-for-scheduling control channel in a preset time period after sending the data packet; and
if the terminal determines that the first scheduling command sent to the terminal is detected in the preset time period, determining, by the terminal based on the indication bit that is in the first scheduling command and that is used to indicate whether the base station correctly receives the data packet sent by the terminal, whether the base station correctly receives the data packet, where the first scheduling command is used to schedule the terminal to resend the data packet or send the next data packet, and the first scheduling command includes the indication bit that is used to indicate whether the base station correctly receives the data packet sent by the terminal.

In this embodiment of the present invention, further, the method further includes the following operations:
receiving, by the terminal, the first common message sent by the base station, where the first common message includes the feedback information, the feedback information can carry the at least two indication bits for the at least two terminals including the terminal, and the indication bit for the terminal in the at least two indication bits is used to indicate whether the base station correctly receives the data packet; and
determining, by the terminal, uplink control information based on the indication bit for the terminal in the at least two indication bits.

In this embodiment of the present invention, if the terminal determines that the first scheduling command sent to the terminal is not detected in the preset time period, the terminal determines, based on the indication bit for the terminal in the at least two indication bits, whether the base station correctly receives the data packet sent by the terminal. Optionally, the feedback information may be a bitmap. In this case, a resource location in the feedback information is a bit location, and each bit location may be allocated to a terminal. Alternatively, the feedback information is carried on a section of a shared resource, and different terminals perform resource multiplexing through code division (CDMA). In this case, a resource location in the feedback information is corresponding to a code resource, and each code resource may be allocated to a terminal to carry ACK/NACK information or other signaling.

The uplink control information includes but is not limited to an uplink power control command.

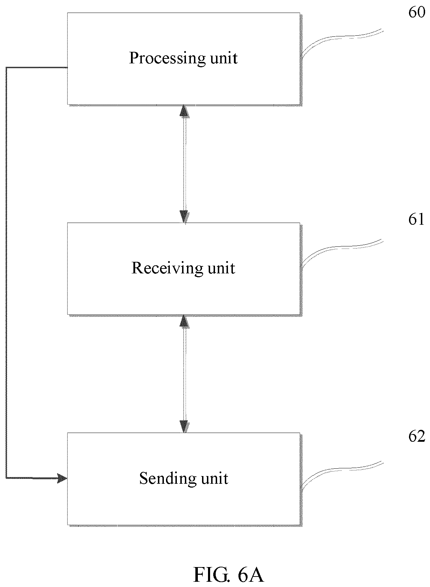

Referring to FIG. 6A, an embodiment of the present invention provides a base station, including a processing unit 60, a receiving unit 61, and a sending unit 62.

The processing unit 60 is configured to determine whether a data packet to be sent by a terminal is the last data packet of the terminal.

The receiving unit 61 is configured to receive the data packet sent by the terminal.

The sending unit 62 is configured to send a first common message to the terminal after the receiving unit 61 receives the data packet sent by the terminal, where the first common message includes feedback information, the feedback information can carry at least two indication bits for at least two terminals including the terminal, and the at least two indication bits include an indication bit that is used to indicate whether the base station correctly receives the data packet sent by the terminal.

The sending unit 62 is further configured to send a first scheduling command to the terminal after the receiving unit 61 receives the data packet sent by the terminal, where the first scheduling command includes an indication bit that is used to indicate whether the base station correctly receives the data packet sent by the terminal, and the first scheduling command is used to schedule the terminal to resend the data packet or send a next new data packet.

Optionally, determining, by the processing unit 60, whether the data packet to be sent by the terminal is the last data packet of the terminal is specifically:
determining, based on a buffer status report fed back by the terminal, whether a buffer status corresponding to the buffer status report exceeds a threshold; and
if yes, determining that the data packet to be sent by the terminal is not the last data packet of the terminal; or
if no, determining that the data packet to be sent by the terminal is the last data packet of the terminal.

Further, the sending unit 62 is further configured to send a second scheduling command to the terminal, where the second scheduling command is used to indicate an uplink resource that is allocated to the terminal for sending the data packet.

The receiving unit 61 is further configured to receive the data packet that is sent by the terminal on the uplink resource.

Further, the sending unit 62 is further configured to send the second scheduling command to the terminal, where the second scheduling command includes feedback resource indication information.

If the processing unit 60 determines that the data packet to be sent by the terminal is the last data packet of the terminal, the feedback resource indication information instructs the terminal to obtain the feedback information from the first common message after sending the data packet, and indicates a location, in the at least two indication bits, of the indication bit that is used to indicate whether the base station correctly receives the data packet sent by the terminal.

If the processing unit 60 determines that the data packet to be sent by the terminal is not the last data packet of the terminal, the feedback resource indication information instructs the terminal to obtain, from the first scheduling command after sending the data packet, the indication bit that is used to indicate whether the base station correctly receives the data packet sent by the terminal.

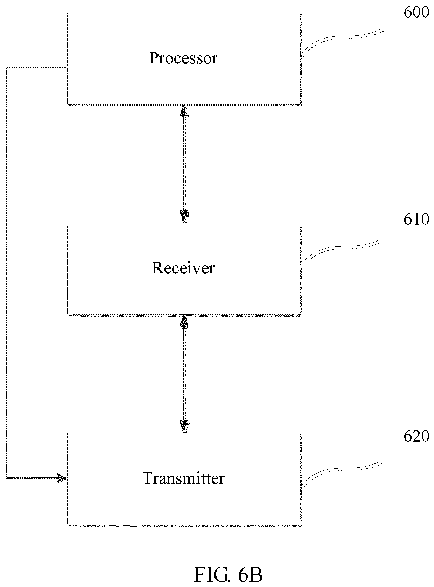

Referring to FIG. 6B, an embodiment of the present invention further provides a base station, including a processor 600, a receiver 610, and a transmitter 620. The processor 600, the receiver 610, and the transmitter 620 all are processors including a plurality of integrated circuit elements.

The processor 600 is configured to determine whether a data packet to be sent by a terminal is the last data packet of the terminal.

The receiver 610 is configured to receive the data packet sent by the terminal.

The transmitter 620 is configured to send a first common message to the terminal after the receiver 610 receives the data packet sent by the terminal, where the first common message includes feedback information, the feedback information can carry at least two indication bits for at least two terminals including the terminal, and the at least two indication bits include an indication bit that is used to indicate whether the base station correctly receives the data packet sent by the terminal.

The transmitter 620 is further configured to send a first scheduling command to the terminal after the receiver 610 receives the data packet sent by the terminal, where the first scheduling command includes an indication bit that is used to indicate whether the base station correctly receives the data packet sent by the terminal, and the first scheduling command is used to schedule the terminal to resend the data packet or send a next new data packet.

Optionally, determining, by the processor 600, whether the data packet to be sent by the terminal is the last data packet of the terminal is specifically:
determining, based on a buffer status report fed back by the terminal, whether a buffer status corresponding to the buffer status report exceeds a threshold; and
if yes, determining that the data packet to be sent by the terminal is not the last data packet of the terminal; or
if no, determining that the data packet to be sent by the terminal is the last data packet of the terminal.

Further, the transmitter 620 is further configured to send a second scheduling command to the terminal, where the second scheduling command is used to indicate an uplink resource that is allocated to the terminal for sending the data packet.

The receiver 610 is further configured to receive the data packet that is sent by the terminal on the uplink resource.

Further, the transmitter 620 is further configured to send the second scheduling command to the terminal, where the second scheduling command includes feedback resource indication information.

If the processor 600 determines that the data packet to be sent by the terminal is the last data packet of the terminal, the feedback resource indication information instructs the terminal to obtain the feedback information from the first common message after sending the data packet, and indicates a location, in the at least two indication bits, of the indication bit that is used to indicate whether the base station correctly receives the data packet sent by the terminal.

If the processor 600 determines that the data packet to be sent by the terminal is not the last data packet of the terminal, the feedback resource indication information instructs the terminal to obtain, from the first scheduling command after sending the data packet, the indication bit that is used to indicate whether the base station correctly receives the data packet sent by the terminal.

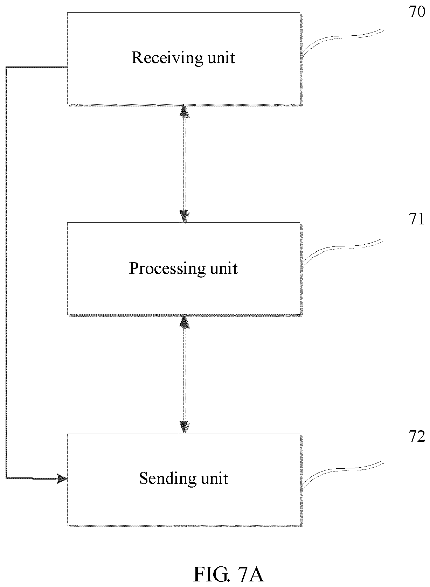

Referring to FIG. 7A, an embodiment of the present invention provides a terminal, including a receiving unit 70 and a processing unit 71.

The receiving unit 70 is configured to receive a second scheduling command sent by a base station to the terminal, where the second scheduling command includes feedback resource indication information.

The processing unit 71 is configured to: if the feedback resource indication information instructs the terminal to obtain feedback information from a first common message after sending a data packet, and indicates a location, in at least two indication bits, of an indication bit that is used to indicate whether the base station correctly receives the data packet sent by the terminal, obtain, from the corresponding indication bit of the at least two indication bits, an indication about whether the base station correctly receives the data packet, to determine whether the base station correctly receives the data packet sent by the terminal, where the feedback information can carry the at least two indication bits for at least two terminals including the terminal, and the at least two indication bits include the indication bit that is used to indicate whether the base station correctly receives the data packet sent by the terminal.

The processing unit 71 is further configured to: if the feedback resource indication information instructs the terminal to obtain, from a first scheduling command after sending the data packet, an indication bit that is used to indicate whether the base station correctly receives the data packet sent by the terminal, obtain, from the corresponding indication bit in the first scheduling command, an indication about whether the base station correctly receives the data packet sent by the terminal, to determine whether the base station correctly receives the data packet sent by the terminal, where the first scheduling command includes the indication bit that is used to indicate whether the base station correctly receives the data packet sent by the terminal, and the first scheduling command is used to schedule the terminal to resend the data packet or send a next new data packet.

Further, the terminal further includes a sending unit 72, configured to feed back a buffer status report to the base station.

Optionally, the second scheduling command is used to indicate an uplink resource that is allocated to the terminal for sending the data packet.

The sending unit 72 is further configured to send the data packet to the base station on the uplink resource allocated to the terminal in the second scheduling command.

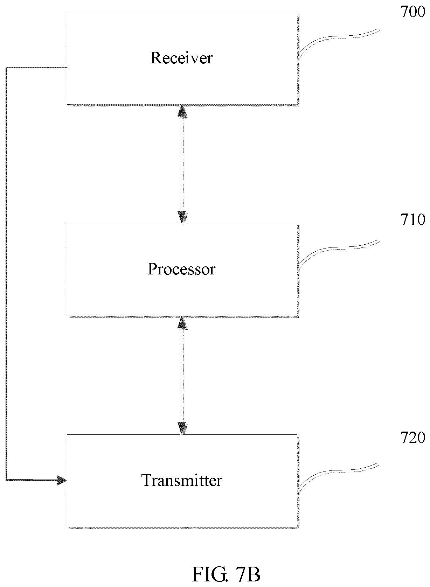

Referring to FIG. 7B, an embodiment of the present invention provides a terminal, including a receiver 700 and a processor 710. The receiver 700 and the processor 710 both are processors including a plurality of integrated circuit elements.

The receiver 700 is configured to receive a second scheduling command sent by a base station to the terminal, where the second scheduling command includes feedback resource indication information.

The processor 710 is configured to: if the feedback resource indication information instructs the terminal to obtain feedback information from a first common message after sending a data packet, and indicates a location, in at least two indication bits, of an indication bit that is used to indicate whether the base station correctly receives the data packet sent by the terminal, obtain, from the corresponding indication bit of the at least two indication bits, an indication about whether the base station correctly receives the data packet, to determine whether the base station correctly receives the data packet sent by the terminal, where the feedback information can carry the at least two indication bits for at least two terminals including the terminal, and the at least two indication bits include the indication bit that is used to indicate whether the base station correctly receives the data packet sent by the terminal.

The processor 710 is further configured to: if the feedback resource indication information instructs the terminal to obtain, from a first scheduling command after sending the data packet, an indication bit that is used to indicate whether the base station correctly receives the data packet sent by the terminal, obtain, from the corresponding indication bit in the first scheduling command, an indication about whether the base station correctly receives the data packet sent by the terminal, to determine whether the base station correctly receives the data packet sent by the terminal, where the first scheduling command includes the indication bit that is used to indicate whether the base station correctly receives the data packet sent by the terminal, and the first scheduling command is used to schedule the terminal to resend the data packet or send a next new data packet.

Further, the terminal further includes a transmitter 720, configured to feed back a buffer status report to the base station. The transmitter 720 may also be a processor including a plurality of integrated circuit elements.

Optionally, the second scheduling command is used to indicate an uplink resource that is allocated to the terminal for sending the data packet.

The transmitter 720 is further configured to send the data packet to the base station on the uplink resource allocated to the terminal in the second scheduling command.

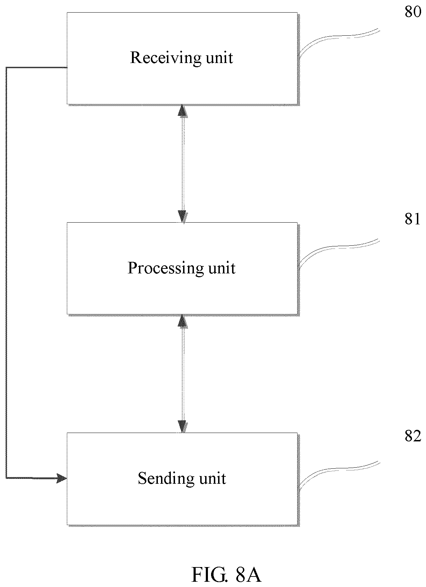

Referring to FIG. 8A, an embodiment of the present invention further provides a base station, including a receiving unit 80, a processing unit 81, and a sending unit 82.

The receiving unit 80 is configured to receive a data packet sent by a terminal.

The processing unit 81 is configured to determine whether the terminal needs to send a next data packet after sending the data packet or needs to retransmit the data packet.

The sending unit 82 is configured to: when the processing unit 81 determines that the terminal needs to send the next data packet or needs to retransmit the data packet, send a first common message to the terminal, where the first common message includes feedback information, the feedback information can carry at least two indication bits for at least two terminals including the terminal, and an indication bit for the terminal in the at least two indication bits is used to indicate uplink control information.

Further, the sending unit 82 is further configured to: when the processing unit 81 determines that the terminal needs to send the next data packet after sending the data packet or needs to retransmit the data packet, send a first scheduling command to the terminal, where the first scheduling command is used to schedule the terminal to resend the data packet or send the next data packet, and the first scheduling command includes an indication bit that is used to indicate whether the base station correctly receives the data packet sent by the terminal.

Further, the sending unit 82 is further configured to: when the processing unit 81 determines that the terminal does not need to send any next data packet after sending the data packet and does not need to retransmit the data packet, send the first common message to the terminal, where the first common message includes the feedback information, the feedback information can carry the at least two indication bits for the at least two terminals including the terminal, and the indication bit for the terminal in the at least two indication bits is used to indicate whether the base station correctly receives the data packet.

Optionally, the determining, by the processing unit 81, that the terminal does not need to send any next data packet after sending the data packet is specifically:
determining, based on an indication identifier carried in the data packet, that the terminal does not need to send any next data packet after sending the data packet, where the indication identifier indicates that the terminal does not need to send any next data packet after sending the data packet.

Further, the sending unit 82 is further configured to send a second scheduling command to the terminal, where the second scheduling command is used to indicate an uplink resource that is allocated to the terminal for sending the data packet, and the second scheduling command includes feedback resource indication information.

If the processing unit 81 determines that the data packet to be sent by the terminal is the last data packet of the terminal, the feedback resource indication information instructs the terminal to obtain the feedback information from the first common message after sending the data packet, and indicates a location, in the at least two indication bits, of the indication bit that is used to indicate whether the base station correctly receives the data packet sent by the terminal.

If the processing unit 81 determines that the data packet to be sent by the terminal is not the last data packet of the terminal, the feedback resource indication information instructs the terminal to obtain, from the first scheduling command after sending the data packet, the indication bit that is used to indicate whether the base station correctly receives the data packet sent by the terminal.

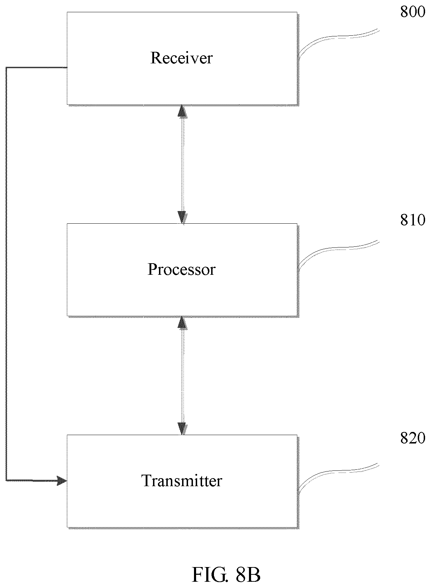

Referring to FIG. 8B, an embodiment of the present invention further provides a base station, including a receiver 800, a processor 810, and a transmitter 820. The receiver 800, the processor 810, and the transmitter 820 all are processors including a plurality of integrated circuit elements.

The receiver 800 is configured to receive a data packet sent by a terminal.

The processor 810 is configured to determine whether the terminal needs to send a next data packet after sending the data packet or needs to retransmit the data packet.

The transmitter 820 is configured to: when the processor 810 determines that the terminal needs to send the next data packet or needs to retransmit the data packet, send a first common message to the terminal, where the first common message includes feedback information, the feedback information can carry at least two indication bits for at least two terminals including the terminal, and an indication bit for the terminal in the at least two indication bits is used to indicate uplink control information.

Further, the transmitter 820 is further configured to: when the processor 810 determines that the terminal needs to send the next data packet after sending the data packet or needs to retransmit the data packet, send a first scheduling command to the terminal, where the first scheduling command is used to schedule the terminal to resend the data packet or send the next data packet, and the first scheduling command includes an indication bit that is used to indicate whether the base station correctly receives the data packet sent by the terminal.

Further, the transmitter 820 is further configured to: when the processor 810 determines that the terminal does not need to send any next data packet after sending the data packet and does not need to retransmit the data packet, send the first common message to the terminal, where the first common message includes the feedback information, the feedback information can carry the at least two indication bits for the at least two terminals including the terminal, and the indication bit for the terminal in the at least two indication bits is used to indicate whether the base station correctly receives the data packet.

Optionally, the determining, by the processor 810, that the terminal does not need to send any next data packet after sending the data packet is specifically:
determining, based on an indication identifier carried in the data packet, that the terminal does not need to send any next data packet after sending the data packet, where the indication identifier indicates that the terminal does not need to send any next data packet after sending the data packet.

Further, the transmitter 820 is further configured to send a second scheduling command to the terminal, where the second scheduling command is used to indicate an uplink resource that is allocated to the terminal for sending the data packet, and the second scheduling command includes feedback resource indication information.

If the processor 810 determines that the data packet to be sent by the terminal is the last data packet of the terminal, the feedback resource indication information instructs the terminal to obtain the feedback information from the first common message after sending the data packet, and indicates a location, in the at least two indication bits, of the indication bit that is used to indicate whether the base station correctly receives the data packet sent by the terminal.

If the processor 810 determines that the data packet to be sent by the terminal is not the last data packet of the terminal, the feedback resource indication information instructs the terminal to obtain, from the first scheduling command after sending the data packet, the indication bit that is used to indicate whether the base station correctly receives the data packet sent by the terminal.

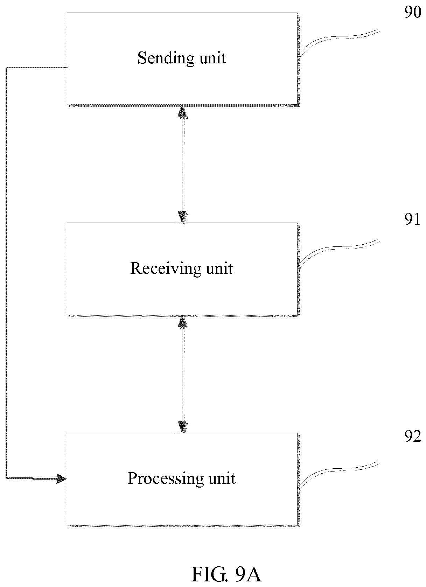

Referring to FIG. 9A, an embodiment of the present invention further provides a terminal, including a sending unit 90, a receiving unit 91, and a processing unit 92.

The sending unit 90 is configured to send a data packet to a base station.

The receiving unit 91 is configured to: when a next data packet needs to be sent after the data packet is sent, receive a first common message sent by the base station, where the first common message includes feedback information, the feedback information can carry at least two indication bits for at least two terminals including the terminal, and an indication bit for the terminal in the at least two indication bits is used to indicate uplink control information.

The processing unit 92 is configured to determine the uplink control information based on the indication bit for the terminal in the at least two indication bits.

Further, the receiving unit 91 is further configured to: after the sending unit 90 sends the data packet, receive a first scheduling command sent by the base station, where the first scheduling command is used to schedule the terminal to resend the data packet or send the next data packet, and the first scheduling command includes an indication bit that is used to indicate whether the base station correctly receives the data packet sent by the terminal.

Optionally, the data packet carries an indication identifier, and the indication identifier indicates that the terminal does not need to send any next data packet after sending the data packet.

Further, the sending unit 90 is further configured to send the data packet to the base station.

The processing unit 92 is further configured to: when the sending unit 90 does not need to send any next data packet after sending the data packet, continuously monitor a used-for-scheduling control channel in a preset time period after the data packet is sent.

The processing unit 92 is further configured to: if it is determined that the first scheduling command sent to the terminal is detected in the preset time period, determine, based on the indication bit that is in the first scheduling command and that is used to indicate whether the base station correctly receives the data packet sent by the terminal, whether the base station correctly receives the data packet, where the first scheduling command is used to schedule the terminal to resend the data packet or send the next data packet, and the first scheduling command includes the indication bit that is used to indicate whether the base station correctly receives the data packet sent by the terminal.

Further, the receiving unit 91 is further configured to receive the first common message sent by the base station, where the first common message includes the feedback information, the feedback information can carry the at least two indication bits for the at least two terminals including the terminal, and the indication bit for the terminal in the at least two indication bits is used to indicate whether the base station correctly receives the data packet.

The processing unit 92 is further configured to determine uplink control information based on the indication bit for the terminal in the at least two indication bits.

Further, the processing unit 92 is further configured to: if it is determined that the first scheduling command sent to the terminal is not detected in the preset time period, determine, based on the indication bit for the terminal in the at least two indication bits, whether the base station correctly receives the data packet sent by the terminal.

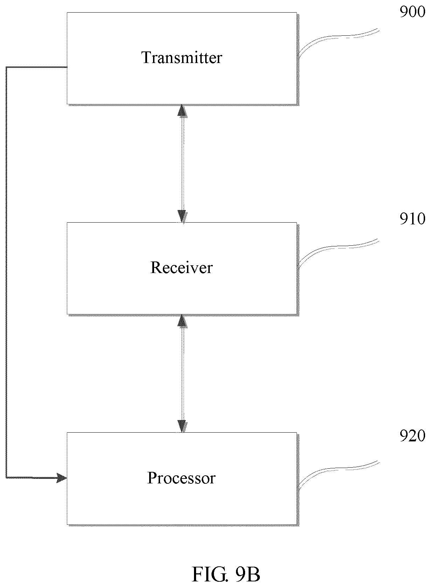

FIG. 9B is another schematic diagram of a terminal according to an embodiment of the present invention. The terminal includes a transmitter 900, a receiver 910, and a processor 920. The transmitter 900, the receiver 910, and the processor 920 are processors including a plurality of integrated circuit elements. For a specific work process, refer to descriptions of the foregoing embodiments. Details are not described herein again.

A person skilled in the art should understand that the embodiments of the present invention may be provided as a method, a system, or a computer program product. Therefore, the present invention may use a form of hardware-only embodiments, software-only embodiments, or embodiments with a combination of software and hardware. Moreover, the present invention may use a form of a computer program product that is implemented on one or more computer-usable storage media (including but not limited to a magnetic disk memory, a CD-ROM, an optical memory, and the like) that include computer-usable program code.

The present invention is described with reference to the flowcharts and/or the block diagrams of the method, the device (system), and the computer program product according to the embodiments of the present invention. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by the computer or the processor of any other programmable data processing device generate an apparatus for implementing a specified function in one or more processes in the flowcharts and/or in one or more blocks in the block diagrams.

These computer program instructions may alternatively be stored in a computer readable memory that can instruct a computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

Although preferred embodiments of the present invention have been described, a person skilled in the art may make additional changes and modifications to these embodiments once learning about the basic inventive concepts. Therefore, the appended claims are intended to be interpreted as including the preferred embodiments and all changes and modifications falling within the scope of the present invention. Cross reference may be made between method descriptions and apparatus descriptions in the embodiments.

Apparently, a person skilled in the art may make various modifications and variations to the embodiments of the present invention without departing from the spirit and scope of the embodiments of the present invention. Therefore, the present invention is intended to cover these modifications and variations to the embodiments of the present invention provided that these modifications and variations fall within the scope of the claims of the present invention and equivalent technologies thereof.

## Claims

1. A feedback method for an uplink channel, comprising:
determining, by a base station, whether a data packet to be sent by a terminal is the last data packet of the terminal; and
if yes, sending, by the base station, a first common message to the terminal after receiving the data packet sent by the terminal, wherein the first common message comprises feedback information, the feedback information can carry at least two indication bits for at least two terminals comprising the terminal, and the at least two indication bits comprise an indication bit that is used to indicate whether the base station correctly receives the data packet sent by the terminal; or
if no, sending, by the base station, a first scheduling command to the terminal after receiving the data packet sent by the terminal, wherein the first scheduling command comprises an indication bit that is used to indicate whether the base station correctly receives the data packet sent by the terminal, and the first scheduling command is used to schedule the terminal to resend the data packet or send a next new data packet.

2. The method according to claim 1, wherein the determining, by a base station, whether a data packet to be sent by a terminal is the last data packet of the terminal comprises:
determining, by the base station based on a buffer status report fed back by the terminal, whether a buffer status corresponding to the buffer status report exceeds a threshold; and
if yes, determining, by the base station, that the data packet to be sent by the terminal is not the last data packet of the terminal; or
if no, determining, by the base station, that the data packet to be sent by the terminal is the last data packet of the terminal.

3. The method according to claim 1 or 2, wherein after the determining, by a base station, whether a data packet to be sent by a terminal is the last data packet of the terminal, and before the receiving the data packet sent by the terminal, the method further comprises:
sending, by the base station, a second scheduling command to the terminal, wherein the second scheduling command is used to indicate an uplink resource that is allocated to the terminal for sending the data packet; and
receiving, by the base station, the data packet that is sent by the terminal on the uplink resource.

4. The method according to any one of claims 1 to 3, further comprising:
sending, by the base station, the second scheduling command to the terminal, wherein the second scheduling command comprises feedback resource indication information, wherein
if the base station determines that the data packet to be sent by the terminal is the last data packet of the terminal, the feedback resource indication information instructs the terminal to obtain the feedback information from the first common message after sending the data packet, and indicates a location, in the at least two indication bits, of the indication bit that is used to indicate whether the base station correctly receives the data packet sent by the terminal; or
if the base station determines that the data packet to be sent by the terminal is not the last data packet of the terminal, the feedback resource indication information instructs the terminal to obtain, from the first scheduling command after sending the data packet, the indication bit that is used to indicate whether the base station correctly receives the data packet sent by the terminal.

5. A feedback method for an uplink channel, comprising:
receiving, by a terminal, a second scheduling command sent by a base station to the terminal, wherein the second scheduling command comprises feedback resource indication information; and
if the feedback resource indication information instructs the terminal to obtain feedback information from a first common message after sending a data packet, and indicates a location, in at least two indication bits, of an indication bit that is used to indicate whether the base station correctly receives the data packet sent by the terminal, obtaining, by the terminal from the corresponding indication bit of the at least two indication bits, an indication about whether the base station correctly receives the data packet, to determine whether the base station correctly receives the data packet sent by the terminal, wherein the feedback information can carry the at least two indication bits for at least two terminals comprising the terminal, and the at least two indication bits comprise the indication bit that is used to indicate whether the base station correctly receives the data packet sent by the terminal; or
if the feedback resource indication information instructs the terminal to obtain, from a first scheduling command after sending a data packet, an indication bit that is used to indicate whether the base station correctly receives the data packet sent by the terminal, obtaining, by the terminal from the corresponding indication bit in the first scheduling command, an indication about whether the base station correctly receives the data packet sent by the terminal, to determine whether the base station correctly receives the data packet sent by the terminal, wherein the first scheduling command comprises the indication bit that is used to indicate whether the base station correctly receives the data packet sent by the terminal, and the first scheduling command is used to schedule the terminal to resend the data packet or send a next new data packet.

6. The method according to claim 5, wherein before the receiving, by a terminal, a second scheduling command sent by a base station to the terminal, the method further comprises:
feeding back, by the terminal, a buffer status report to the base station.

7. The method according to claim 5, wherein the second scheduling command is used to indicate an uplink resource that is allocated to the terminal for sending the data packet; and
the method further comprises:
sending, by the terminal, the data packet to the base station on the uplink resource allocated to the terminal in the second scheduling command.

8. A feedback method for an uplink channel, comprising:
receiving, by a base station, a data packet sent by a terminal, and determining whether the terminal needs to send a next data packet after sending the data packet or needs to retransmit the data packet; and
when determining that the terminal needs to send the next data packet or needs to retransmit the data packet, sending, by the base station, a first common message to the terminal, wherein the first common message comprises feedback information, the feedback information can carry at least two indication bits for at least two terminals comprising the terminal, and an indication bit for the terminal in the at least two indication bits is used to indicate uplink control information.

9. The method according to claim 8, wherein if the base station determines that the terminal needs to send the next data packet after sending the data packet or needs to retransmit the data packet, the method further comprises:
sending, by the base station, a first scheduling command to the terminal, wherein the first scheduling command is used to schedule the terminal to resend the data packet or send the next data packet, and the first scheduling command comprises an indication bit that is used to indicate whether the base station correctly receives the data packet sent by the terminal.

10. The method according to claim 8, wherein the method further comprises:
when the base station determines that the terminal does not need to send any next data packet after sending the data packet and does not need to retransmit the data packet, sending, by the base station, the first common message to the terminal, wherein the first common message comprises the feedback information, the feedback information can carry the at least two indication bits for the at least two terminals comprising the terminal, and the indication bit for the terminal in the at least two indication bits is used to indicate whether the base station correctly receives the data packet.

11. The method according to any one of claims 8 to 10, wherein the determining, by the base station, whether the terminal needs to send a next data packet after sending the data packet comprises:
determining, by the base station based on an indication identifier carried in the data packet, that the terminal does not need to send any next data packet after sending the data packet, wherein the indication identifier indicates that the terminal does not need to send any next data packet after sending the data packet.

12. The method according to any one of claims 8 to 11, wherein before the receiving, by a base station, a data packet sent by a terminal, the method further comprises:
sending, by the base station, a second scheduling command to the terminal, wherein the second scheduling command is used to indicate an uplink resource that is allocated to the terminal for sending the data packet, and the second scheduling command comprises feedback resource indication information, wherein
if the base station determines that the data packet to be sent by the terminal is the last data packet of the terminal, the feedback resource indication information instructs the terminal to obtain the feedback information from the first common message after sending the data packet, and indicates a location, in the at least two indication bits, of the indication bit that is used to indicate whether the base station correctly receives the data packet sent by the terminal; or
if the base station determines that the data packet to be sent by the terminal is not the last data packet of the terminal, the feedback resource indication information instructs the terminal to obtain, from the first scheduling command after sending the data packet, the indication bit that is used to indicate whether the base station correctly receives the data packet sent by the terminal.

13. A feedback method for an uplink channel, comprising:
sending, by a terminal, a data packet to a base station;
when the terminal needs to send a next data packet after sending the data packet, receiving, by the terminal, a first common message sent by the base station, wherein the first common message comprises feedback information, the feedback information can carry at least two indication bits for at least two terminals comprising the terminal, and an indication bit for the terminal in the at least two indication bits is used to indicate uplink control information; and
determining, by the terminal, the uplink control information based on the indication bit for the terminal in the at least two indication bits.

14. The method according to claim 13, wherein the method further comprises:
after sending the data packet, receiving, by the terminal, a first scheduling command sent by the base station, wherein the first scheduling command is used to schedule the terminal to resend the data packet or send the next data packet, and the first scheduling command comprises an indication bit that is used to indicate whether the base station correctly receives the data packet sent by the terminal.

15. The method according to claim 13 or 14, wherein the data packet carries an indication identifier, and the indication identifier indicates that the terminal does not need to send any next data packet after sending the data packet.

16. The method according to any one of claims 13 to 15, wherein the method further comprises:
sending, by the terminal, the data packet to the base station;
when the terminal does not need to send any next data packet after sending the data packet, continuously monitoring, by the terminal, a used-for-scheduling control channel in a preset time period after sending the data packet; and
if the terminal determines that the first scheduling command sent to the terminal is detected in the preset time period, determining, by the terminal based on the indication bit that is in the first scheduling command and that is used to indicate whether the base station correctly receives the data packet sent by the terminal, whether the base station correctly receives the data packet, wherein the first scheduling command is used to schedule the terminal to resend the data packet or send the next data packet, and the first scheduling command comprises the indication bit that is used to indicate whether the base station correctly receives the data packet sent by the terminal.

17. The method according to claim 16, wherein the method further comprises:
receiving, by the terminal, the first common message sent by the base station, wherein the first common message comprises the feedback information, the feedback information can carry the at least two indication bits for the at least two terminals comprising the terminal, and the indication bit for the terminal in the at least two indication bits is used to indicate whether the base station correctly receives the data packet; and
determining, by the terminal, uplink control information based on the indication bit for the terminal in the at least two indication bits.

18. The method according to claim 16, comprising: if the terminal determines that the first scheduling command sent to the terminal is not detected in the preset time period, determining, by the terminal based on the indication bit for the terminal in the at least two indication bits, whether the base station correctly receives the data packet sent by the terminal.

19. Abase station, comprising:
a processing unit, configured to determine whether a data packet to be sent by a terminal is the last data packet of the terminal;
a receiving unit, configured to receive the data packet sent by the terminal; and
a sending unit, configured to send a first common message to the terminal after the receiving unit receives the data packet sent by the terminal, wherein the first common message comprises feedback information, the feedback information can carry at least two indication bits for at least two terminals comprising the terminal, and the at least two indication bits comprise an indication bit that is used to indicate whether the base station correctly receives the data packet sent by the terminal, wherein
the sending unit is further configured to send a first scheduling command to the terminal after the receiving unit receives the data packet sent by the terminal, wherein the first scheduling command comprises an indication bit that is used to indicate whether the base station correctly receives the data packet sent by the terminal, and the first scheduling command is used to schedule the terminal to resend the data packet or send a next new data packet.

20. The base station according to claim 19, wherein determining, by the processing unit, whether the data packet to be sent by the terminal is the last data packet of the terminal is specifically:
determining, based on a buffer status report fed back by the terminal, whether a buffer status corresponding to the buffer status report exceeds a threshold; and
if yes, determining that the data packet to be sent by the terminal is not the last data packet of the terminal; or
if no, determining that the data packet to be sent by the terminal is the last data packet of the terminal.

21. The base station according to claim 19 or 20, wherein the sending unit is further configured to send a second scheduling command to the terminal, wherein the second scheduling command is used to indicate an uplink resource that is allocated to the terminal for sending the data packet; and
the receiving unit is further configured to receive the data packet that is sent by the terminal on the uplink resource.

22. The base station according to any one of claims 19 to 21, wherein the sending unit is further configured to send the second scheduling command to the terminal, wherein the second scheduling command comprises feedback resource indication information; and
if the processing unit determines that the data packet to be sent by the terminal is the last data packet of the terminal, the feedback resource indication information instructs the terminal to obtain the feedback information from the first common message after sending the data packet, and indicates a location, in the at least two indication bits, of the indication bit that is used to indicate whether the base station correctly receives the data packet sent by the terminal; or
if the processing unit determines that the data packet to be sent by the terminal is not the last data packet of the terminal, the feedback resource indication information instructs the terminal to obtain, from the first scheduling command after sending the data packet, the indication bit that is used to indicate whether the base station correctly receives the data packet sent by the terminal.

23. A terminal, comprising:
a receiving unit, configured to receive a second scheduling command sent by a base station to the terminal, wherein the second scheduling command comprises feedback resource indication information; and
a processing unit, configured to: if the feedback resource indication information instructs the terminal to obtain feedback information from a first common message after sending a data packet, and indicates a location, in at least two indication bits, of an indication bit that is used to indicate whether the base station correctly receives the data packet sent by the terminal, obtain, from the corresponding indication bit of the at least two indication bits, an indication about whether the base station correctly receives the data packet, to determine whether the base station correctly receives the data packet sent by the terminal, wherein the feedback information can carry the at least two indication bits for at least two terminals comprising the terminal, and the at least two indication bits comprise the indication bit that is used to indicate whether the base station correctly receives the data packet sent by the terminal, wherein
the processing unit is further configured to: if the feedback resource indication information instructs the terminal to obtain, from a first scheduling command after sending the data packet, an indication bit that is used to indicate whether the base station correctly receives the data packet sent by the terminal, obtain, from the corresponding indication bit in the first scheduling command, an indication about whether the base station correctly receives the data packet sent by the terminal, to determine whether the base station correctly receives the data packet sent by the terminal, wherein the first scheduling command comprises the indication bit that is used to indicate whether the base station correctly receives the data packet sent by the terminal, and the first scheduling command is used to schedule the terminal to resend the data packet or send a next new data packet.

24. The terminal according to claim 23, further comprising a sending unit, configured to feed back a buffer status report to the base station.

25. The terminal according to claim 23, wherein the second scheduling command is used to indicate an uplink resource that is allocated to the terminal for sending the data packet; and
the sending unit is further configured to send the data packet to the base station on the uplink resource allocated to the terminal in the second scheduling command.

26. Abase station, comprising:
a receiving unit, configured to receive a data packet sent by a terminal;
a processing unit, configured to determine whether the terminal needs to send a next data packet after sending the data packet or needs to retransmit the data packet; and
a sending unit, configured to: when the processing unit determines that the terminal needs to send the next data packet or needs to retransmit the data packet, send a first common message to the terminal, wherein the first common message comprises feedback information, the feedback information can carry at least two indication bits for at least two terminals comprising the terminal, and an indication bit for the terminal in the at least two indication bits is used to indicate uplink control information.

27. The base station according to claim 26, wherein the sending unit is further configured to:
when the processing unit determines that the terminal needs to send the next data packet after sending the data packet or needs to retransmit the data packet, send a first scheduling command to the terminal, wherein the first scheduling command is used to schedule the terminal to resend the data packet or send the next data packet, and the first scheduling command comprises an indication bit that is used to indicate whether the base station correctly receives the data packet sent by the terminal.

28. The base station according to claim 26, wherein the sending unit is further configured to:
when the processing unit determines that the terminal does not need to send any next data packet after sending the data packet and does not need to retransmit the data packet, send the first common message to the terminal, wherein the first common message comprises the feedback information, the feedback information can carry the at least two indication bits for the at least two terminals comprising the terminal, and the indication bit for the terminal in the at least two indication bits is used to indicate whether the base station correctly receives the data packet.

29. The base station according to any one of claims 26 to 28, wherein the determining, by the processing unit, that the terminal does not need to send any next data packet after sending the data packet is specifically:
determining, based on an indication identifier carried in the data packet, that the terminal does not need to send any next data packet after sending the data packet, wherein the indication identifier indicates that the terminal does not need to send any next data packet after sending the data packet.

30. The base station according to any one of claims 26 to 29, wherein the sending unit is further configured to send a second scheduling command to the terminal, wherein the second scheduling command is used to indicate an uplink resource that is allocated to the terminal for sending the data packet, and the second scheduling command comprises feedback resource indication information; and
if the processing unit determines that the data packet to be sent by the terminal is the last data packet of the terminal, the feedback resource indication information instructs the terminal to obtain the feedback information from the first common message after sending the data packet, and indicates a location, in the at least two indication bits, of the indication bit that is used to indicate whether the base station correctly receives the data packet sent by the terminal; or
if the processing unit determines that the data packet to be sent by the terminal is not the last data packet of the terminal, the feedback resource indication information instructs the terminal to obtain, from the first scheduling command after sending the data packet, the indication bit that is used to indicate whether the base station correctly receives the data packet sent by the terminal.

31. A terminal, comprising:
a sending unit, configured to send a data packet to a base station;
a receiving unit, configured to: when a next data packet needs to be sent after the data packet is sent, receive a first common message sent by the base station, wherein the first common message comprises feedback information, the feedback information can carry at least two indication bits for at least two terminals comprising the terminal, and an indication bit for the terminal in the at least two indication bits is used to indicate uplink control information; and
a processing unit, configured to determine the uplink control information based on the indication bit for the terminal in the at least two indication bits.

32. The terminal according to claim 31, wherein the receiving unit is further configured to:
after the sending unit sends the data packet, receive a first scheduling command sent by the base station, wherein the first scheduling command is used to schedule the terminal to resend the data packet or send the next data packet, and the first scheduling command comprises an indication bit that is used to indicate whether the base station correctly receives the data packet sent by the terminal.

33. The terminal according to claim 31 or 32, wherein the data packet carries an indication identifier, and the indication identifier indicates that the terminal does not need to send any next data packet after sending the data packet.

34. The terminal according to any one of claims 31 to 33, wherein the sending unit is further configured to send the data packet to the base station;
the processing unit is further configured to: when the sending unit does not need to send any next data packet after sending the data packet, continuously monitor a used-for-scheduling control channel in a preset time period after the data packet is sent; and
the processing unit is further configured to: if it is determined that the first scheduling command sent to the terminal is detected in the preset time period, determine, based on the indication bit that is in the first scheduling command and that is used to indicate whether the base station correctly receives the data packet sent by the terminal, whether the base station correctly receives the data packet, wherein the first scheduling command is used to schedule the terminal to resend the data packet or send the next data packet, and the first scheduling command comprises the indication bit that is used to indicate whether the base station correctly receives the data packet sent by the terminal.

35. The terminal according to claim 34, wherein the receiving unit is further configured to receive the first common message sent by the base station, wherein the first common message comprises the feedback information, the feedback information can carry the at least two indication bits for the at least two terminals comprising the terminal, and the indication bit for the terminal in the at least two indication bits is used to indicate whether the base station correctly receives the data packet; and
the processing unit is further configured to determine uplink control information based on the indication bit for the terminal in the at least two indication bits.

36. The terminal according to claim 34, wherein the processing unit is further configured to:
if it is determined that the first scheduling command sent to the terminal is not detected in the preset time period, determine, based on the indication bit for the terminal in the at least two indication bits, whether the base station correctly receives the data packet sent by the terminal.
